# EUROPEAN PATENT APPLICATION

(11) **EP 4 335 696 A1**
(43) Date of publication of application: **13.03.2024**
(21) Application number: 23204623.5
(22) Date of filing: 19.10.2023
(51) Int. Cl.: B60P 7/13

(54) **A LOCKING ASSEMBLY**

(71) Applicant: Hiab AB, 164 22 Kista (SE)
(72) Inventor: VÄHÄ-PIIKKIÖ, Ville, FI-21290 Rusko (FI); MATTILA, Tommi, FI-21530 Paimio (FI)
(74) Representative: Bjerkén Hynell KB

(57) **Abstract**

A locking assembly (2) for securing a position of a load carrying object (4) with corner mounts (6) during loading, unloading or transport, the locking assembly (2) comprises a horizontal locking structure (8) movable between a first position, in which the horizontal locking structure (8) is arranged to protrude into a horizontal portion opening (10) of the corner mount (6) to restrict movement of the corner mount (6) in a horizontal direction, and a second position to release the corresponding horizontal movement restriction of the corner mount (6). The locking assembly also comprises a vertical locking structure (12) mechanically connected to the horizontal locking structure (8), the vertical locking structure (12) being movable between a third position, wherein a portion of the vertical locking structure (12) is arranged in an opening (14) of a vertical side of the corner mount (6) to restrict movement of the corner mount (6) in a vertical direction, and a fourth position to release the corresponding vertical movement restriction of the corner mount (6). The locking assembly (2) further comprises an actuator member (16) connected to one of the horizontal and vertical locking structures (8, 12), wherein the actuator member (16) is further structured to control the positions of both the horizontal locking structure (8) and the vertical locking structure (12) by a linear movement.

## Description

### Technical field

The present disclosure relates to a locking assembly, and also to a vehicle provided with at least one locking assembly for locking, i.e. firmly holding or securing, a load handling object, e.g. a standard ISO 668 container, to the vehicle.

### Background

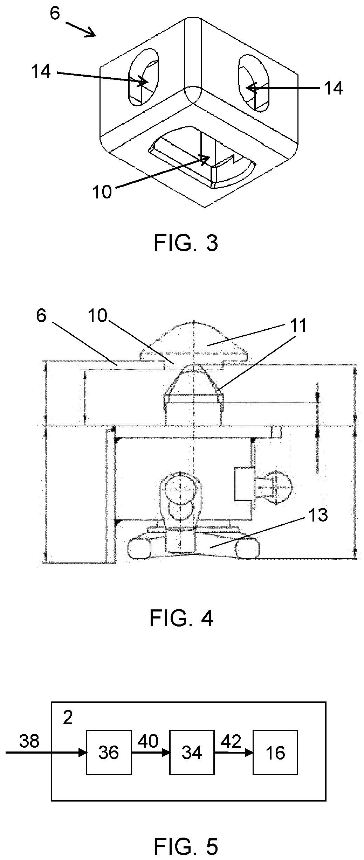

A common standard of the transport industry for securing a container to a transport device, e.g. a truck, is to use manually operated twist-locks. A standard ISO 668 container is equipped with corner mounts that include holes for container locking. These corner mounts are also being used in other cases, for example some military flat-rack containers utilise these. A container is usually equipped with eight or more corner mounts arranged such that in every corner there is one corner mount mounted, making it possible to handle, e.g. lifting, and locking, i.e. firmly securing, the container appropriately to e.g. a vehicle. A standard corner mount 6 is shown in figure 3, and is provided with a horizontal portion opening 10 (in figure 3, a bottom portion opening) at a horizontal side of the corner mount 6, and openings 14 of the outward facing vertical sides of the corner mount. The illustrated corner mount may be mounted e.g. at the forward lower left corner of the container. For corner mounts at the upper side of the container an opening 10 is arranged at the top side (i.e. facing upwards from the container).

A commonly applied twist-lock is shown in figure 4 in a cross-sectional view. It consists of a housing part, an anvil 11 and a hand wheel 13 that is used to tighten the anvil to the corner mount. The operation is such that the anvil is lifted up from a housing through a hole of the corner mount. The anvil is then rotated 90 degrees and tightened with the hand wheel against the inside bottom of the corner mount. The anvil in a locked position is shown by dashed lines. In some occasions it may be beneficial to allow the anvil to be in a half-raised position, for example to facilitate positioning of the container when a crane or another external means is used for loading the container to the vehicle. In one commonly applied procedure the container is loaded to the vehicle from the rear of the vehicle by a hooklift mounted at the vehicle.

ISO 668 containers are containers according to an international standard which classifies intermodal freight shipping containers nominally, and standardizes their sizes, measurements and weight specifications. Containers of the type described above are usually rectangular with floor, roof, two side walls and two end walls. One end wall usually consists of a door portion which is often formed as a pair of doors. Corner mounts with oval holes are usually arranged at the corners of the container and allow connecting and lashing of containers. To connect and lash two or more containers, use is made of equipment comprising a lockable coupling which can be inserted into and locked to a corner mount of an ISO container.

The female part of the connector is a 7×7×4+1/2 in (180×180×110 mm) corner mount according to one commonly applied standard, which forms each of the eight corners, welded to the container itself, and has no moving parts, only an oval hole in the tops of the four upper corners, and in the bottom of the four lower corners. The hole is an oval 4.9 in (124.5 mm) on the long axis with two flat sides 2.5 in (63.5 mm) apart. The corner mount is also provided with two oval holes at its outer vertical sides. As discussed above, the male component may commonly be the twistlock, which is fitted to e.g. spreaders for cranes and transport bases. The twistlock can be inserted through the hole (it is roughly 4.1 in or 104.1 mm long and 2.2 in or 55.9 mm wide), and then the top portion (normally pointed to make insertion easier) is rotated 90°, for locking to the container.

The below listed patent documents disclose various solutions in the technical field of locking containers to a vehicle.

EP1232905A2 relates to a system for transporting containers on a truck and comprises locks mounted on pivots on the chassis. These swivel between two positions, allowing them to cooperate with goose neck tunnels on containers.

EP1300285A1 relates to an assembly to hold and secure containers of different types, to a truck chassis. It is provided with a lateral carrier which can be positioned as required by the container type along the longitudinal line of the chassis. The locking mechanism for the first container type has a locking pin held in a vertical, position at a swing arm to grip in a corner fitting of the container. The locking mechanism for a second type of container has an inserted bolt which, when in the holding position, grips horizontally in a container corner fitting.

JP2011051559A discloses a container loading semi-trailer comprising a locking system for locking the container with the trailer. The locking system comprises a plurality of fastening devices wherein one of the fastening devices comprises a twist locking pin and the other device comprises a locking pin configured to engage with the engaging holes provided on the container. The system also comprises a pneumatic system for controlling the locking system.

Objects of the present invention are to achieve an improved locking assembly that is less complex, easier to handle, more robust, and less voluminous than the presently applied solutions. A particular object is that the locking assembly should be possible to control from a remote position in order to provide an automated locking procedure.

### Summary

The above-mentioned objects are achieved by the present invention according to the independent claims.

Preferred embodiments are set forth in the dependent claims.

According to a first aspect a locking assembly is provided, for securing a position of a load carrying object with corner mounts during loading, unloading or transport.

The locking assembly comprises:
- A horizontal locking structure movable between a first position, in which the horizontal locking structure is arranged to protrude into a horizontal portion opening, where the horizontal portion opening preferably being a bottom portion opening of the corner mount, to restrict movement of the corner mount in a horizontal direction, and a second position to release the corresponding horizontal movement restriction of the corner mount.
- A vertical locking structure mechanically connected to the horizontal locking structure, the vertical locking structure being movable between a third position, wherein a portion of the vertical locking structure is arranged in an opening of a vertical side of the corner mount to restrict movement of the corner mount in a vertical direction, and a fourth position to release the corresponding vertical movement restriction of the corner mount. The locking assembly further comprises an actuator member connected to one of the horizontal and vertical locking structures, wherein the actuator member is structured to control the positions of both the horizontal locking structure and the vertical locking structure by a linear movement.

An advantageous feature of the locking assembly is that only one actuator member is required to control the movements of both the horizontal and vertical locking structures. This feature, in combination that the actuator movement is a linear movement, results in that the actuator member, and then also the locking assembly requires less space than the presently applied solutions.

In one embodiment, the actuator member is a linear actuator structured for automatic actuation of one of the horizontal and vertical locking structures, and preferably being controlled by a control unit in response of instructions applied to an input device by an operator, or received from a supervising system. Thereby, remote control of the locking assembly may be achieved which is advantageous because an operator then may control the loading and unloading, e.g. from the cabin of the vehicle, that considerably increases the safety of the operator during a loading/unloading procedure.

In a further embodiment, when the horizontal locking structure is in the first position and the vertical locking structure is in the third position, i.e. the structures being in their locking positions, the horizontal and vertical locking structures are configured to provide a self-locking function by leading locking forces directly to a main body of the locking assembly and not to the actuator member. This is advantageous as the main body is more robust and capable to withstand the forces the locking structures are subjected to. Thus, the actuator member is only used to move parts of the locking structures to their different positions, and not to take up the forces the locking structures are subjected to, resulting in that the size and capabilities of the actuator member may be adapted to its intended use.

### Brief description of the drawings

Figure 1 is a side-view of a vehicle provided with a hooklift arrangement.
Figures 2A-2C show schematic illustrations of the hooklift arrangement performing a loading procedure of a load carrying object, being a container.
Figure 3 is a schematic illustration of a corner mount.
Figure 4 is a cross-sectional view of a commonly applied twist-lock.
Figure 5 is a block-diagram of locking assembly according to embodiments of the present invention.
Figures 6-9 show schematic side-views and views in a horizontal plane of a locking assembly in various positions, according to a first embodiment of the present invention.
Figures 10-12 show schematic side-views and views in a horizontal plane of a locking assembly in various positions, according to a second embodiment of the present invention.

### Detailed description

The locking assembly will now be described in detail with references to the appended figures. Throughout the figures the same, or similar, items have the same reference signs. Moreover, the items and the figures are not necessarily to scale, emphasis instead being placed upon illustrating the principles of the invention.

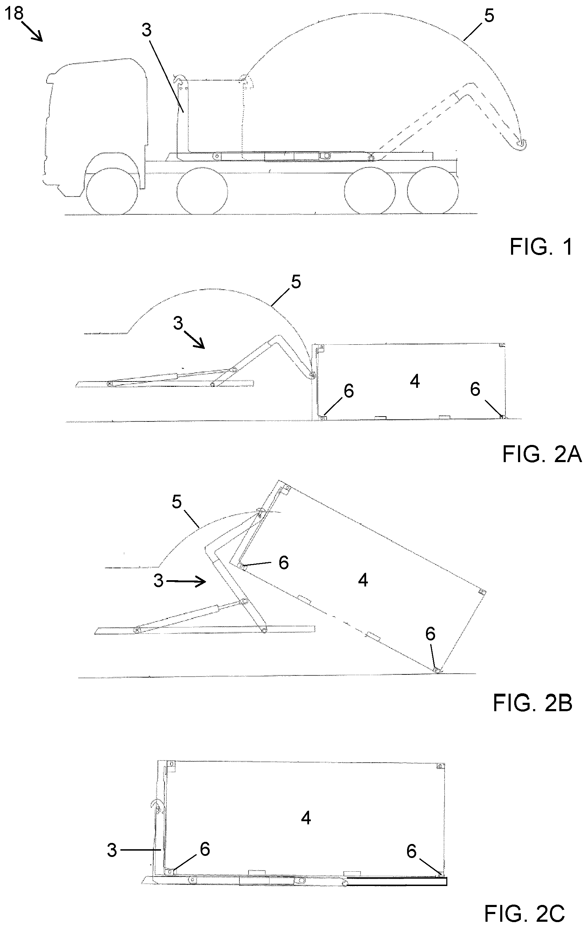

Figure 1 discloses a vehicle 18 provided with a hooklift arrangement 3 mounted at the vehicle, provided with means for loading and unloading a load carrying object 4 to and from the vehicle. In figure 1, various positions of the hooklift arrangement 3 are shown and the trajectory 5 of the hook during a loading/unloading procedure is also illustrated. The locking assembly according to the present invention may be mounted at the vehicle.

Figures 2A-2C show schematic illustrations of the hooklift arrangement 3 performing a loading procedure of a load carrying object 4, which, in the figure, being an ISO 668 container.

In figure 2A the container 4 is positioned on ground and the hook is attached to an attachment bar mounted at the container. In figure 2B the hooklift arrangement 3 has lifted one end of the container and started to pull the container onto the vehicle. And, in figure 2C, the loading procedure is terminated and the container is now positioned on the vehicle.

It is in this loaded position one or many locking assemblies according to the present invention is/are applied to lock the container to the vehicle. The locking assemblies may as an example be applied to the front lower corners mounts of the container and/or the rear lower corner mounts of the container.

The invention relates to a locking assembly 2 for securing a position of a load carrying object 4 with corner mounts 6 during loading, unloading or transport.

Preferably, the locking assembly is arranged for securing the position of the load carrying object 4 being an ISO 668 container provided with corner mounts 6 according to standard, during loading, unloading or transport by a vehicle, e.g. a loader truck. As illustrated in figures 1, and 2A-2C, the vehicle may be provided with a hooklift arranged for loading a load carrying object to a load-bed of the vehicle from the rear end of the vehicle.

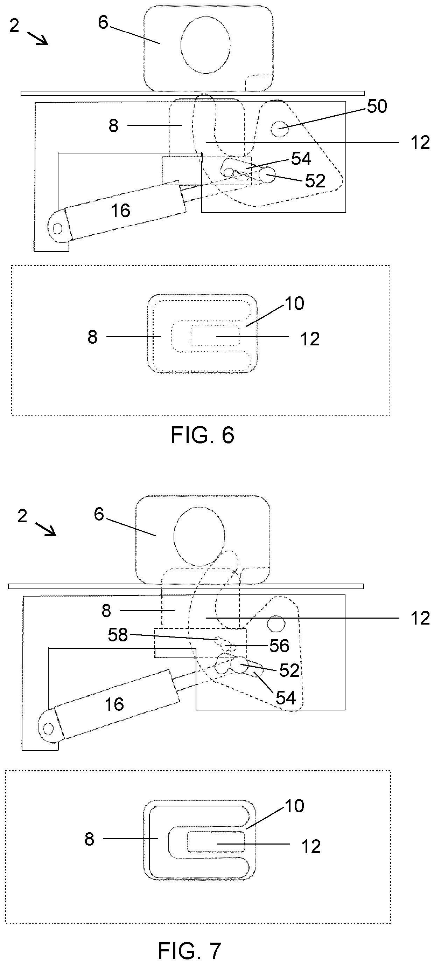

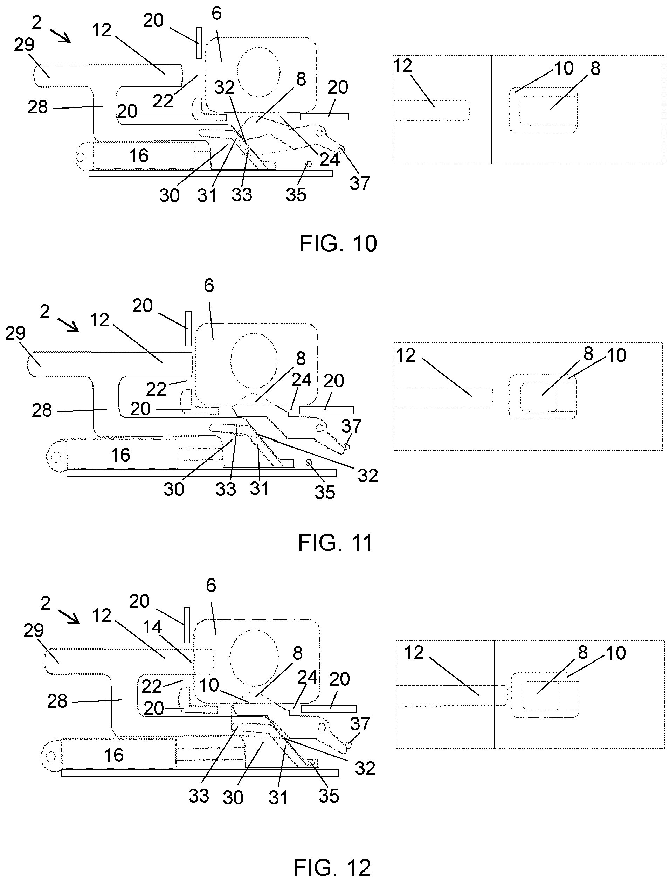

The locking assembly will be described in detail with references to two embodiments. The first embodiment is illustrated in figures 6-9, and the second embodiment is illustrated with references to figures 10-12. First, a general description of the locking assembly will be provided with references to figures 6-12, and then the first and second embodiments will be separately described in detail.

The locking assembly 2 comprises a horizontal locking structure 8 movable between a first position, in which the horizontal locking structure 8 is arranged to protrude into a horizontal portion opening 10 of the corner mount 6 to restrict movement of the corner mount 6 in a horizontal direction, and a second position to release the corresponding horizontal movement restriction of the corner mount 6. The locking structure being in the first position is illustrated in figures 7-9, 11, and 12. From figure 7-9 it is illustrated that the first position is a position providing the horizontal locking, and that the horizontal locking structure may be in this first position for the horizontal locking at different vertical extensions into the corner mount. The locking structure being in the second position is illustrated in figures 6 and 10.

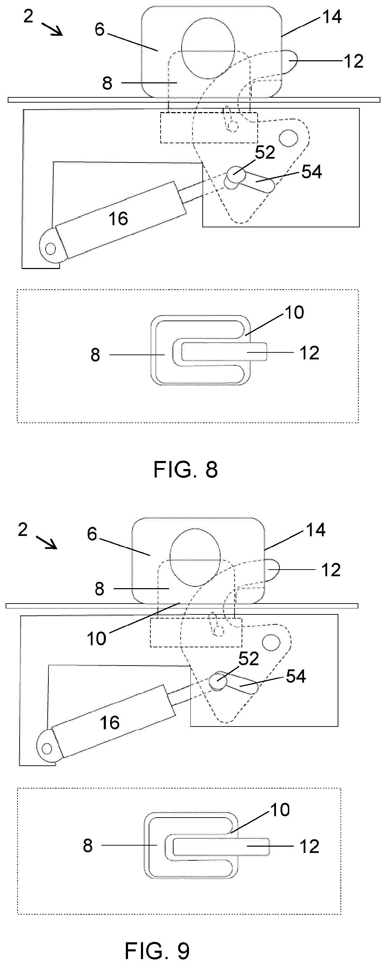

The locking assembly 2 also comprises a vertical locking structure 12 mechanically connected to the horizontal locking structure 8, the vertical locking structure 12 being movable between a third position, wherein a portion of the vertical locking structure 12 is arranged in an opening 14 of a vertical side of the corner mount 6 to restrict movement of the corner mount 6 in a vertical direction, and a fourth position to release the corresponding vertical movement restriction of the corner mount 6. The locking structure being in the third position is illustrated in figures 8, 9, and 12. The locking structure being in the fourth position is illustrated in figures 6, 7, 10, and 11.

In addition, the locking assembly 2 further comprises an actuator member 16 connected to one of the horizontal and vertical locking structures 8, 12. The actuator member 16 is structured to control the positions of both the horizontal locking structure 8 and the vertical locking structure 12 by a linear movement.

According to an embodiment, the actuator member 16 is a linear actuator for automatic actuation of one of the horizontal and vertical locking structures 8, 12. The linear actuator may be a hydraulically operated actuator that may be remotely activated and controlled. The linear movement may also be provided by an electrical motor with a cog-wheel at its rotation axle and subjecting its rotation to an elongated rod provided with corresponding cogs for cooperation with the cog-wheel.

In one alternative variation, the linear movement may be a manual operation by providing e.g. a movable pin for manual actuation of one of the horizontal and vertical locking structures. The actuator member 16 would in this alternative variation comprise a manually actuated pin.

According to another embodiment, the locking assembly 2 is arranged to operate in a plurality of locking states controlled by movements provided by the actuator member 16. The plurality of locking states comprises a first locking state wherein the horizontal locking structure 8 is in the first position and the vertical locking structure 12 is in the fourth position. In the first locking state the horizonal locking structure 8 is in its locking position thereby preventing movement in the horizontal direction.

In a second locking state, the horizontal locking structure 8 is in the first position and the vertical locking structure 12 is in the third position. In the second locking state, both the horizontal locking structure 8 and the vertical locking structure 12 are in their locking positions.

According to still another embodiment, when the horizontal locking structure is in the first position and the vertical locking structure is in the third position, i.e. the structures being in their locking positions, the horizontal and vertical locking structures are configured to provide a self-locking function by leading locking forces directly to a main body of the locking assembly and not to the actuator member. According to still another embodiment of the invention, the locking assembly 2 may be configured to provide a tightening of the horizontal and vertical locking structures by the movement of the actuator member 16.

The first embodiment of the invention will now be described, in particular with references to figures 6-9. The upper part of each of these figures shows a side view of the locking assembly, and the lower part of each of these figures shows a view of a virtual horizontal plane at the level of the bottom surface of the corner mount. The illustrated horizontal locking structure 8, and the vertical locking structure 12 are shown by dotted lines if they are below the virtual horizontal level, and by solid lines if above.

According to the first embodiment, the locking assembly 2 is provided with a horizontal locking structure 8 that is an anvil movable between the first position, in which the anvil is arranged to protrude into a horizontal portion opening 10 of the corner mount 6 to restrict a movement of the corner mount 6 in a horizontal direction, and the second position to release the corresponding horizontal movement restriction of the corner mount 6.

The anvil has a size and a shape adapted to the horizontal portion opening 10 of the corner mount 6. Advantageously it is bevelled along its upper edge in order to facilitate positioning of the corner mount 6, and thus the load carrying object 4.

Still according to the first embodiment, the vertical locking structure 12 is a hook structure connected to the anvil. The hook structure being movable between the third position, wherein the hook structure is arranged to protrude into the horizontal portion opening 10 of the corner mount 6 and out from an opening 14 of a vertical portion of the corner mount 6 to restrict a movement of the corner mount 6 in a vertical direction, and the fourth position to release the corresponding vertical movement restriction of the corner mount 6. The actuator member 16 is mechanically connected to the hook structure, and is further arranged to control the positions of the hook structure and the anvil by its linear movement.

The locking assembly according to the first embodiment is particularly applicable and configured to be mounted at a vehicle 18 for locking a lower rear corner mount 6 of a load carrying object 4.

The first embodiment will now be described in detail with references to each of figures 6-9.

Referring to figure 6 where the locking assembly is in a releasing state, i.e. neither horizontal nor vertical locking action is applied to the corner mount 6. The locking assembly comprises an actuator member 16 with linear movement, side plates with guide slot and pin, a hook-shaped plate 12, and an anvil 8. The anvil has a C-shaped open rectangular cross-sectional shape, which is shown in the lower parts of the figures 6-9, and that is adapted to be inserted into the bottom opening of the corner mount 6. The hook 12 is made from a plate having a thickness that fits in the open part of the anvil. The hook is movably attached to, and rotatable about, an axle 50 between the position shown in figure 6 and the position shown in figure 9. The movement is applied to the hook 12 by a linear actuator of the actuator member 16 that applies its movement to the hook by a pin 52 arranged to be moved along a slot 54. In figure 6, the linear actuator is in is extended position, thereby urging the hook to be in the releasing position. In addition, the anvil includes a follower pin 56 (see figure 7) which follows a slot 58 (see figure 7) in the hook plate, thereby providing movement to the anvil.

Upon length changes of the linear actuator, the hook pivots about its axle 50 which also forces the anvil to change its position due to the follower pin 56.

The features of the locking assembly according to this embodiment also provides a self-keeping mechanism to secure the hook and anvil mechanisms so that movement forces from the container are received by the hook and anvil and not by the actuator member. In particular, when the linear actuator of the actuator member is fully retracted, which is illustrated in figure 9, the locking pin 52 is being dragged to the end of the slot 54 where the slot is designed such that the slot secures the locking pin against hook rotation, and thus prevents movements from the locked positions of both the hook and the anvil. From the figures 6-9 it is illustrated how the linear movement of the actuator member 16 provides a releasing state as fully extended and that it by a retraction movement from fully extended may activate the first locking state and then subsequently the second locking state by a further retraction movement. In an alternative of the first embodiment the actuator member 16 may activate the releasing state as fully retracted and then moving to a first locking state by an extension movement and by further extension then the second locking state.

The second embodiment of the invention will now be described, in particular with references to figures 10-15. The upper part of each of figures 10-12 shows a side view of the locking assembly, and the lower part of each of these figures shows a view of a virtual horizontal plane at the level of the bottom surface of the corner mount. The illustrated horizontal locking structure 8, and the vertical locking structure 12, are shown by dotted lines if they are below the virtual horizontal level, and by solid lines if above.

According to the second embodiment, the locking assembly 2 is provided with a housing 20 having a vertical side comprising a first opening 22 and a horizontal side comprising second opening 24. The vertical and horizontal sides are arranged to support a corner mount 6 of the load carrying object 4. The housing 20 may form part of a structure of a load handling equipment assembly such as a hooklift assembly.

The horizontal locking structure 8 is movable between the first position, being a locked position, and that a first portion 26 of the horizontal locking part is arranged to protrude from the second opening 24 to protrude into a bottom portion 10 of the corner mount 6 and the second position, being an unlocked position (where the horizontal locking part does not protrude into the opening).

Furthermore, in relation to the second embodiment, the vertical locking structure 12 is a vertical locking part, movable between the third position, being a locked position, and that a first portion of the vertical locking structure is arranged to protrude from the first opening 22 into an opening 14 of a vertical side of the corner mount 6, and the fourth position, being an unlocked position (position not protruding into an opening 14). The actuator member 16 is arranged to control the positions of the movable horizontal locking structure and the movable vertical locking structure by its linear movement. In figures 10-12 it is illustrated how the linear movement of the actuator member 16 provides a releasing state as fully retracted and that it by an extension movement from fully retracted may activate the first locking state and then subsequently the second locking state by a further extension movement. In an alternative of the second embodiment the actuator member 16 may activate the releasing state as fully extended and then moving to a first locking state by a retraction movement and by further retraction then the second locking state.

In this embodiment, the vertical locking structure 12 preferably further comprises a second portion 28 attached to the actuator member 16, and a third portion 30 arranged to interact with the horizontal locking structure 8. The second portion 28 may comprise a part 29 that may be visible for the operator to manually check and monitor the locking state of the locking assembly. The third portion comprises a cam surface 32 structured to move the horizontal locking structure 8 between its locked and unlocked positions, upon movement of the vertical locking structure 12. The third portion may further comprise a guiding structure which guides a pin connected to the horizontal locking structure 8 so that it is safely pulled down when the actuator member 16 retracts to unlock the horizontal locking structure.

In a further embodiment the third portion 30 may comprise a guiding slot 31 in which a guide pin 33 attached to the horizontal locking structure 8 may slide depending on the extension of the actuator member 16. With such an embodiment, also schematically illustrated in figures 10-12, the vertical position of the guide pin 33 will be restricted by the guide slot 31 and hence make sure that the horizontal structure 8 is pulled down and properly released from a locking position.

In yet a further embodiment, openings for mounting sensors are arranged inside the housing 20. By using different sorts of optical of proximity sensors the locking states can be monitored. As illustrated in figures 10-12 sensors may be arranged in positions 35 and 37 to monitor the position of the horizontal locking structure 8 and/or the vertical locking structure 12.

Preferably, the locking assembly according to the second embodiment is configured to be mounted at a vehicle 18 for locking a lower front corner mount 6 of a load carrying object 4 to the vehicle.

As described above, the use of the twistlock in prior art solutions is typically manual and the automation of the twist-lock requires quite complex arrangements. Also, the traditional twistlock has quite big space requirement in vertical direction, which is problematic especially in the front end, where the second front axle tires and mudguards are located in the same area. By applying the lock assembly according to the second embodiment, the container locking may be automated while keeping the arrangement of the system easy, robust and space efficient.

The second embodiment will now be described in more detail with references to each of figures 10-12.

Referring to figure 10 where the locking assembly is in a releasing state, i.e. neither horizontal nor vertical locking action is applied to the corner mount 6.

As described above, the locking assembly of the second embodiment comprises a housing 20, an actuator member 16 providing linear movement by a linear actuator, a sliding vertical locking structure 12 and a horizontal locking structure 8. The linear actuator is connected to the vertical locking structure 12. During movement of the linear actuator, the horizontal locking structure 8 is structured to slide against the cam surface on the vertical locking structure 12. The linear actuator movement will first cause the horizontal locking structure 8 to raise up through the corner mount bottom hole (see figure 11) and at the end of the movement the vertical locking structure 12 will then penetrate through the corner mount 6 front hole 14 (see figure 12).

In normal use when the container is loaded on the truck by using the hooklift, the locking assembly is driven from a released state to the second locking state (and the other way around for unloading from the truck by using the hooklift), i.e. from the position shown in figures 6 and 10, to the position shown in figures 8-9, and 12.

The container may also be loaded onto the truck by some other external means, e.g. by a forklift, a stacker or a harbour crane. In this situation the locking assembly may be driven to a middle position, the first locking state, where only the horizontal locking structure 8 is lifted up in a locking position, but the vertical locking structure is still fully inside the housing for the second embodiment, which is illustrated in figure 11. Similarly, for the first embodiment the vertical locking structure is then in a position where it is not protruding from the opening of the corner mount, see figure 7. In this position the horizontal locking structure may help guiding the container to correct position on the truck.

The locking assembly according to the second embodiment is self-locking in such way that the locking forces are going through the vertical locking structure and the horizontal locking structure directly to the housing. The actuator member is only used for moving the components to the correct position.

According to another embodiment illustrated in figure 5, being applicable to both the first and second embodiment disclosed above, the locking assembly 2 comprises a control unit 34 configured to control the linear movement provided by the actuator member 16. Preferably, the locking assembly also comprises an input device 36 capable of receiving input instructions 38 from an operator, or from a supervising system (not shown), and to generate and apply input signals 40 to the control unit 34 that is configured to generate control signals 42 to the actuator member 16 in dependence of the input signals 40. This embodiment provides necessary means for performing an automatic and remote control of the locking assembly. As an example, the input device may be mounted in a driver's cabin and the driver may then load and unload a load carrying object, and lock the object to the load bed of the vehicle, without having to leave the cabin.

The invention also relates to a vehicle 18 comprising at least one locking assembly 2 as described above. As mentioned above, the vehicle may be provided with a hooklift for loading and unloading the load carrying object.

According to one embodiment, the vehicle 18 comprises a pair of locking assemblies 2 of the type according to the first embodiment, configured to be mounted at the vehicle 18 for locking lower rear corner mounts 6 of a load carrying object 4, and a pair of locking assemblies 2 of the type according to the second embodiment, configured to be mounted at a vehicle 18 for locking lower front corner mounts 6 of a load carrying object 4.

In the illustrated embodiments of the locking assembly it has primarily been described in relation to loading and unloading of a load carrying object to a vehicle using e.g. a hooklift, and the locking assembly has been used to lock and unlock the load carrying object via its lower corner mounts. The corner mounts at the lower corners of the load carrying object have then been used, and specifically the horizontal portion openings, being the bottom portion openings of the corner mount. However, the locking assembly disclosed herein may also be applied when lifting load carrying objects, e.g. ISO 668 containers, via its upper corner mounts, where the horizontal portion openings 10 of the corner mount 6 are the openings of the corner mount facing upwards.

The present invention is not limited to the above-described preferred embodiments. Various alternatives, and modifications may be used. Therefore, the above embodiments should not be taken as limiting the scope of the invention, which is defined by the appending claims.

## Claims

1. A locking assembly (2) for securing a position of a load carrying object (4) with corner mounts (6) during loading, unloading or transport, the locking assembly (2) comprises:
- a horizontal locking structure (8) movable between a first position, in which the horizontal locking structure (8) is arranged to protrude into a horizonal portion opening (10) of the corner mount (6) to restrict movement of the corner mount (6) in a horizontal direction, and a second position to release the corresponding horizontal movement restriction of the corner mount (6), and
- a vertical locking structure (12) mechanically connected to the horizontal locking structure (8), the vertical locking structure (12) being movable between a third position, wherein a portion of the vertical locking structure (12) is arranged in an opening (14) of a vertical side of the corner mount (6) to restrict movement of the corner mount (6) in a vertical direction, and a fourth position to release the corresponding vertical movement restriction of the corner mount (6), **characterized in that** said locking assembly (2) further comprises an actuator member (16) connected to one of the horizontal and vertical locking structures (8, 12), wherein the actuator member (16) is further structured to control the positions of both the horizontal locking structure (8) and the vertical locking structure (12) by a linear movement.

2. The locking assembly (2) according to claim 1, wherein the actuator member (16) is a linear actuator for automatic actuation of one of the horizontal and vertical locking structures (8, 12).

3. The locking assembly (2) according to claim 1 or 2, is further arranged to operate in a plurality of locking states controlled by movements provided by the actuator member (16), wherein the plurality of locking states comprises a first locking state wherein the horizontal locking structure (8) is in the first position and the vertical locking structure (12) is in the fourth position, and a second locking state, wherein the horizontal locking structure (8) is in the first position and the vertical locking structure (12) is in the third position.

4. The locking assembly (2) according to any of claims 1-3, wherein when said horizontal locking structure is in the first position and said vertical locking structure is in the third position, i.e. said structures being in their locking positions, said horizontal and vertical locking structures are configured to provide a self-locking function by leading locking forces directly to a main body of the locking assembly and not to the actuator member.

5. The locking assembly (2) according to any of claims 1-4, wherein:
- said horizontal locking structure (8) is an anvil movable between the first position, in which the anvil is arranged to protrude into a horizontal portion opening (10) of the corner mount (6) to restrict a movement of the corner mount (6) in a horizontal direction, and the second position to release the corresponding horizontal movement restriction of the corner mount (6),
- said vertical locking structure (12) is a hook structure connected to the anvil, the hook structure being movable between the third position, wherein the hook structure is arranged to protrude into the horizontal portion opening (10) of the corner mount (6) and out from an opening (14) of a vertical portion of the corner mount (6) to restrict a movement of the corner mount (6) in a vertical direction, and the fourth position to release the corresponding vertical movement restriction of the corner mount (6), and wherein said actuator member (16) is mechanically connected to the hook structure, and is further arranged to control the positions of the hook structure and the anvil by its linear movement.

6. The locking assembly (2) according to claim 5, configured to be mounted at a vehicle (18) for locking a lower rear corner mount (6) of a load carrying object (4).

7. The locking assembly (2) according to any of claims 1-4, further comprising a housing (20) having a vertical side comprising a first opening (22) and a horizontal side comprising second opening (24), wherein said vertical and horizontal sides are arranged to support a corner mount (6) of the load carrying object (4), and that
- said horizontal locking structure (8) is a horizontal locking part, being movable between the first position, being a locked position, wherein a first portion (26) of the horizontal locking part is arranged to protrude from the second opening (24) to protrude into a horizontal portion opening (10) of the corner mount (6) and the second position, being an unlocked position,
- said vertical locking structure (12) is a vertical locking part, movable between the third position, being a locked position, wherein a first portion of the vertical locking part is arranged to protrude from the first opening (22) to protrude into an opening (14) of a vertical side of the corner mount (6), and the fourth position, being an unlocked position, and wherein
- said actuator member (16) is arranged to control the positions of the movable horizontal locking part and the movable vertical locking part by its linear movement.

8. The locking assembly (2) according to claim 7, wherein the vertical locking part (12) further comprises a second portion (28) attached to the actuator member (16), and a third portion (30) arranged to interact with the horizontal locking part (8), wherein said third portion is a cam surface (32) structured to move the horizontal locking part (8) between its locked and unlocked positions, upon movement of the vertical locking part (12).

9. The locking assembly (2) according to claim 7 or 8, configured to be mounted at a vehicle (18) for locking a lower front corner mount (6) of a load carrying object (4).

10. The locking assembly (2) according to any of claims 1-9, comprising a control unit (34) configured to control the linear movement provided by said actuator member (16).

11. The locking assembly (2) according to claim 10, further comprising an input device (36) capable of receiving input instructions (38) from an operator, or from a supervising system, and to generate and apply input signals (40) to said control unit (34) that is configured to generate control signals (42) to said actuator member (16) in dependence of said input signals (40).

12. The locking assembly (2) according to any of claims 1-11, arranged for securing a position of the load carrying object (4) being an ISO 668 container provided with corner mounts (6) according to standard, during loading, unloading or transport.

13. A vehicle (18) comprising at least one locking assembly (2) according to any of claims 1-12.

14. The vehicle (18) according to claim 13, comprising a pair of locking assemblies (2) according to claim 5, configured to be mounted at the vehicle (18) for locking lower rear corner mounts (6) of a load carrying object (4), and a pair of locking assemblies (2) according to any of claims 7-9, configured to be mounted at a vehicle (18) for locking lower front corner mounts (6) of a load carrying object (4).
